# EUROPÄISCHE PATENTSCHRIFT

(11) **EP 2 523 468 B1**
(45) Veröffentlichungstag und Bekanntmachung des Hinweises auf die Patenterteilung: **03.02.2016**
(21) Anmeldenummer: 12002853.5
(22) Anmeldetag: 24.04.2012
(51) Int. Cl.: H04Q 9/00, G01D 4/00

(54) **Verfahren und Einrichtung zum Übermitteln von Verbrauchs-Daten**
Method and device for transferring consumption data
Procédé et dispositif de transmission de données de consommation

(30) Priorität: 12.05.2011 DE 102011101314
(43) Veröffentlichungstag der Anmeldung: 14.11.2012
(73) Patentinhaber: Diehl Metering Systems GmbH, 90451 Nürnberg (DE)
(72) Erfinder: Kauppert, Thomas, 90489 Nürnberg (DE); Gottschalk, Klaus, 90610 Winkelhaid (DE); Bach, Guy, 68640 Waldighoffen (FR)
(74) Vertreter: Diehl Patentabteilung

(56) Entgegenhaltungen:
- US-A1- 2008 062 005
- US-B2- 7 057 525

## Beschreibung

Für eine drahtlose Übermittlung von später in einer Zentrale auszuwertenden Verbrauchs-Daten sind generell relativ geringe Funk-Reichweiten ausreichend, wenn in der Nähe senderbestückter Messorte für etwa Wasser-, Gas-, Strom- oder Wärmeverbrauch ein Empfänger vorbeibewegt wird, in dem die mittels Datentelegrammen von den Messorten übermittelten Verbrauchs-Daten zwischengespeichert werden. Für eine solche mobile Abfrage müssen die Telegramme häufig, etwa alle paar Sekunden, gesendet werden, weil der mobile Empfänger nur vorübergehend gerade in Empfangsreichweite der einzelnen Messort-Sender ist.

Hingegen werden künftig längere Funk-Reichweiten in Betracht zu ziehen sein, wenn sich die Installation von stationären Empfängern durchgesetzt haben wird, die in ständigem Funkkontakt mit den umliegenden Messort-Sendern stehen und deshalb in wesentlich größeren zeitlichen Abständen, etwa alle paar Stunden bis zu nur einmal täglich, von den Messorten Verbrauchs-Daten übermittelt bekommen.

Die in mobilen Empfängern aufgenommenen und zwischengespeicherten Verbrauchs-Daten werden, gewissermaßen körperlich, an eine Zentrale zur Auswertung und Abrechnung überbracht; während solche Übermittlung von stationären Empfängern aus bevorzugt per Funk mittels Fernverkehrs-Technologien erfolgt, etwa im Mobilfunk- oder DSL-Standard.

Auf derartige Gegebenheiten beziehen sich die in den Oberbegriffen der Hauptansprüche angegebenen Merkmale, die aus der US 7,057,525 B2 bekannt sind. Für den mobilen Empfang werden vom jeweiligen Messort mit hoher Folgefrequenz kurze Telegramme ausgesandt; während dort gleichzeitig, vom selben Messort-Sender aus, schmalbandige lange Telegramme zum Weitbereichs-Empfang durch stationäre Empfänger übermittelt werden. Da nicht auszuschließen ist, dass ein stationärer Empfänger zusätzlich zu den Weitbereichs-Telegrammen auch, von anderen Sendern aus der näheren Umgebung, Nahbereichs-Telegramme aufnimmt, sind die Weitbereichs-Empfänger dafür eingerichtet, empfangene kurze Telegramme vor der Demodulation auszublenden.

Der Gedanke, dafür die beiden spektral unterschiedlichen Telegrammtypen mit Trägerfrequenzen in unterschiedlichen Funkkanälen zu übertragen, wird als zu kostspielig verworfen - wobei offenbar daran gedacht ist, dass für ein effektives Filtern der gegenseitige Frequenzversatz so groß sein müsste, dass dann an jedem Messort zwei unterschiedlich ausgelegte Sender zwei unterschiedlich bemessene Antennen speisen müssten. Die Nahbereichs- und die WeitbereichsEmpfänger weisen dort deshalb eingangsseitig für dieselbe Trägerfrequenz ein breitbandiges Herabsetzen auf eine Zwischenfrequenz auf. Für die Auslegung des mobilen Nahbereichs-Empfängers wird dann davon ausgegangen, dass es unerheblich ist, wenn die mit hoher Folgefrequenz aktualisiert empfangenen kurzen Telegramme alle paar Stunden einmal vorübergehend von einem langen Telegramm gestört werden. Problematisch ist dagegen für die Funktion des Weitbereichs-Empfängers, dass während der selten auftretenden langen Telegramme einige deren Bits von den häufig überlagerten kurzen Telegrammen gestört werden. Herkömmliche Filtertechniken seien hier nicht einsetzbar, da dann infolge Überschwingens die störende Auswirkung eines kurzen Telegrammes auf ein Bit im gerade anstehenden langen Telegramm sogar noch verlängert werden würde. Deshalb ist beim Weitbereichs-Empfänger vorgesehen, den Signalweg zum Demodulator bei Auftreten eines hinreichend starken kurzen Telegrammes von einem darauf programmierten Detektor vorübergehend unterbrechen zu lassen. Sollte gerade ein Weitbereichs-Telegramm empfangen werden, wird deshalb auch dessen Auswertung so lange unterbrochen. Weil aber nun keine Verlängerung dieser Störung (durch Überschwingen infolge etwaiger schmalbandiger Filterung des kurzen Telegrammes) auftritt, kann die Störung des aktuellen Bit im Weitbereichs-Telegramm über die Dimensionierung monostabilen Schaltverhaltens des Detektors auf eine für die Demodulation und Dekodierung des langen Telegrammes unschädliche Unterbrechung von typisch um 30% einer Bit-Länge begrenzt werden; wobei solches Austasten des kurzen Nahbereichs-Telegramms im Weitbereichs-Empfänger statt in konventioneller Schaltungstechnik auch mittels eines entsprechend programmierten Signalprozessors erzielbar ist. Allerdings spricht der Detektor zum vorübergehenden Abschalten des Weitbereichs-Demodulators nur auf das ihm vorgegebene Nahbereichs-Telegramm an. Gleichartige Störeinflüsse, die nicht dessen Kodierung aufweisen, werden nicht abgeblockt und führen deshalb in ungünstigem Fall dazu, dass das aktuelle Weitbereichs-Telegramm nicht demoduliert werden kann; mit der nachteiligen Folge langen Zuwartens bis zum Erscheinen des nächsten (dann hoffentlich über seine gesamte Länge ungestörten) Weitbereichs-Telegrammes viele Stunden später. Trotz des Aufwandes für auf gleicher Trägerfrequenz gleichzeitig übermittelte unterschiedliche Telegrammtypen ergibt das im Ergebnis kein störfestes Weitbereichs-Übertragungssystem.

Eine andere Ausgestaltung des Szenarios der gleichzeitigen Übermittlung von Verbrauchsdaten über längere und über kürzere Distanzen ist in der EP 1 630 980 B1 beschrieben. Danach werden die von den Messorten per Funk übermittelten Verbrauchsdaten zweimal kodiert, nämlich zu Datentelegrammen in Kanalkodierung - bei gleicher Sendeleistung und -frequenz und vorzugsweise zeitlich gegeneinander versetzt - einmal für geringere Reichweiten ohne und einmal für größere Reichweiten mit Anwendung von Kodemultiplex-Spreizbandverfahren. Problematisch bei dieser vorbekannten Lösung ist der Aufwand, der in jedem einzelnen der Messort-Sender für die Reichweiten-Gewährleistung durch Spreizband-Kodierung betrieben werden muss. Deren grundsätzlichen Vorteile sind zudem in der Praxis nur begrenzt nutzbar, weil aus Kostengründen die Messorte üblicherweise nicht über eine Empfangseinrichtung verfügen, die aber zur Synchronisierung für eine empfangsseitige Kreuzkorrelationsauswertung erforderlich wäre. Auch eine Zeitsteuerung zum Beschränken der ständig in rascher Folge ausgesandten Nahbereichs-Datentelegramme auf zeitlich gegenüber dem Aussenden der seltener auftretenden Weitbereichs-Datentelegramme abgegrenzte Zeitblöcke würde einer Synchronisation bedürfen. Ohne solchen definierten Zeitversatz sind aber Kollisionen und damit Datenverlust infolge unvermeidbarer Überlappungen der Datentelegramme letztlich nicht vermeidbar. Im Ergebnis sind die Weitbereichs-Telegramme durch das Spreizen nur geringfügig besser gegen Störungen geschützt, als die Nahbereichs-Telegramme.

Nach der DE 1 01 33 367 A1 begnügt man sich damit, für Empfang im Nahbereich mit reduzierter Sendeleistung lange Datentelegramme in rascher Folge und für Empfang im Weitbereich mit erhöhter Sendeleistung kurze Datentelegramme in dagegen größeren zeitlichen Abständen auszusenden, bei stochastisch schwankenden Sendeabständen zwischen aufeinanderfolgenden Datentelegrammen. Der Aufwand für unterschiedlich kodierte Telegrammtypen ist wiederum beträchtlich. Die Problematik der Störung der nur selten empfangenen Weitbereichs-Telegramme durch gleichzeitig von anderen Sendern empfangene Nahbereichs-Telegramme ist hier nicht thematisiert.

Vorliegender Erfindung liegt dagegen die technische Problemstellung zugrunde, Datentelegramme für mobilen und für stationären Empfang mit verringertem Aufwand praktisch kollisionsfrei zur Verfügung zu stellen.

Diese Aufgabe ist gemäß den in den Hauptansprüchen angegebenen wesentlichen Merkmalen gelöst. Danach werden bei jedem der Messorte sowohl in hoher Folgefrequenz Nahbereichs-Telegramme wie auch dagegen wesentlich seltener gleich lange Weitbereichs-Telegramme auf geringfügig gegeneinander versetzten Trägerfrequenzen abgestrahlt, nämlich beide von einem Sender über eine Antenne weil der Trägerfrequenz-Unterschied vergleichsweise gering ist. Für den Nahbereich wird dabei eine etwas höhere Trägerfrequenz bevorzugt, als für den Weitbereichsfunk. Die Datenraten liegen in gleicher Größenordnung (etwa bei 1:1 bis ca. 1:5; im Gegensatz zu 1:500 beim zitierten Stande der Technik).

Um trotz der nahe benachbarten Trägerfrequenzen für eine ungestörte Demodulation gute Filterergebnisse zu erzielen, werden in den Weitbereichsempfängern die empfangenen Frequenzen nach Bandpassfilterungen vor und nach einer Vorverstärkung zunächst in wenigstens zwei aufeinanderfolgenden Überlagerungsstufen auf letztlich tiefe und dadurch relativ stärker beabstandete Zwischenfrequenzen herabgemischt. Eine besonders flankensteile Bandpassfilterung vor diesem Herabmischen auf die Zwischenfrequenzen und eine abermalige enge Bandpassfilterung dann um die herabgemischte Weitbereichs-Trägerfrequenz herum führt zu kontinuierlichem Bedämpfen nicht nur empfangener Nahbereichs-Telegramme, sondern darüber hinaus auch beliebigfrequenter Störungen abseits der Weitbereichs-Telegramme.

In den Nahbereichsempfängern sind solche trägerfrequenzabhängigen Bedämpfungen vor der Demodulation nicht erforderlich; nämlich weil es ja unkritisch ist, wenn in größeren Abständen einmal selbst eine Folge von kurzen Nahbereichs-Telegrammen von einem der dagegen sehr selten auftretenden Weitbereichs-Telegramme oder anderweitig vorübergehend gestört oder gar blockiert wird. In der raschen Aufeinanderfolge der Nahbereichs-Telegramme liegt somit eine Redundanz, die nicht spürbar beeinträchtigt wird, wenn von Zeit zu Zeit einmal eines der Nahbereichs-Telegramme empfangsseitig nicht ausgewertet werden kann.

Mittels Simulationstechniken lässt sich zeigen, dass beim Senden von häufigen Nachbereichs- und von dagegen viel selteneren Weitbereichs-Telegrammen auf gleicher Trägerfrequenz bei einer bestimmten Anzahl von gleichzeitig zu empfangenden Sendern nach bereits einer Betriebsstunde etwa 60% von deren Weitbereichs-Datentelegrammen wegen Kollisionen (also wegen vorübergehender gegenseitiger zeitlicher Überlappungen mit Nahbereichs-Telegrammen) nicht mehr verwertbar wären. Unterschiedliche Kodierungen zum Diskriminieren zwischen Nah- und Weitbereichs-Telegrammen würden die Situation zwar etwas verbessern, aber nicht bis auf die Verhältnisse beim Kollisionsszenario nach der erfindungsgemäßen Frequenzdiskrimination - mit ihrem zusätzlichen Vorteil, für alle Telegramme die gleiche Datenrate einsetzen zu können.

Das Bedämpfen von Nahbereichs-Datentelegrammen nur und erst in den vergleichsweise wenigen Weitbereichs-Empfängern ist nicht nur deshalb vorteilhaft, weil ein einziger stationärer Empfänger stets eine Vielzahl an untereinander gleich ausgelegten Messort-Sendern erfasst; sondern auch deshalb, weil typischerweise Funkempfänger für die Übermittlung von Telegrammen mit Verbrauchs-Daten schon gegenwärtig kaum noch in Hardware, sondern zunehmend in Software für Signalprozessoren unter Berücksichtigung des vorgegebenen Charakters der zu erwartenden Datentelegramme realisiert werden. Dafür wird das jeweilige Empfangssignal eines Datentelegrammes praktisch schon hinter dem Antenneneingang - hier nach Vorverstärkung und Überlagerungs-Herabmischung zur Zwischenfrequenz - abgetastet (etwa mittels eines Scanprogrammes) und über angepasste Filteralgorithmen im Signalprozessor ausgewertet. Auch die Bereitstellung einer zweiten Träger-Frequenz in den einzelnen Messort-Sendern bedingt keinen gesteigerten Hardwareaufwand, weil auch die Frequenzgenerierung im Sender für die Datentelegramme problemlos softwaremäßig erfolgen kann (jedenfalls solange der Frequenzunterschied zwischen den Trägerfrequenzen für die beiden unterschiedlichen Telegrammtypen gleicher Datenraten weniger als 10 MHz beträgt).

Da die Weitbereichs-Datentelegramme im jeweiligen Messort-Sender wesentlich seltener als die Nahbereichs-Datentelegramme generiert werden, können sie mit erheblich größerer Energie und somit Reichweite gesendet werden, ohne die Leistungsquelle der batteriebetriebenen Messort-Sender für zusätzliche Weitbereichs-Telegramme vergrößern zu müssen, also unter Beibehalten der für Nahbereichsbetrieb eingeführten Batteriebestückung.

Weitere Abwandlungen und zusätzliche Alternativen im Rahmen vorliegender Erfindung ergeben sich aus den weiteren Ansprüchen und, auch hinsichtlich deren Vorteile, aus nachstehender Beschreibung eines bevorzugten Realisierungsbeispieles zur erfindungsgemäßen Lösung. Die Zeichnung veranschaulicht mittels auf das Funktionswesentliche abstrahierter Prinzipskizzen:
- Fig.1: den Einsatz von Nah- und von Weitbereichs-Empfängern zum Aufnehmen von Verbrauchsdaten von verschiedenen Messorten sowie eine Daten-Fernübermittlung an eine Auswerte-Zentrale und
- Fig.2: die Filter-Funktion vor der Demodulation in einem Weitbereichsempfänger.

Bei den Messorten x handelt es sich um eine Vielzahl von Verbrauchserfassungs-Messgeräten für Versorgungsleistungen wie die Belieferung der einzelnen Einheiten von Wohnanlagen mit z.B. Wasser, Gas, Strom oder Fernwärme. Jeder dieser Messorte x ist mit einem Sender s ausgestattet. Der sendet mit zwei geringfügig gegeneinander versetzten Trägerfrequenzen f₁ und f₂ digitalisierte und orts-kodierte Verbrauchs-Daten D in jeweils aktualisierten, rasch aufeinanderfolgenden Nahbereichs-Datentelegrammen T₁ und in dagegen viel seltener aufeinanderfolgenden Weitbereichs-Datentelegrammen T₂. Die Trägerfrequenzen fi für die Datentelegramme Tᵢ liegen bevorzugt in relativ frei belegbaren Industriebändern des Dezimeterwellenspektrums, etwa für den Nahbereich im Kanal bei 868,95 MHz und für den seltener aktiven Weitbereich im stärker reglementierten, insbesondere weniger dicht belegbaren Kanal bei 868,3 MHz. Vorzugsweise sind die Datenraten aller Datentelegramme Ti gleich, um für beide Bereiche gleichermaßen kurze Telegramme T₁ und T₂ auszusenden, was den Energiebedarf ebenso wie die Kollisionsgefahr minimiert. Die Wahl hoher Datenraten (typisch zwischen etwa 100 und 205 kBit/s) ermöglicht solche kurzen und entsprechend gering störgefährdeten Datentelegramme Ti und bedingt auch die geringe vorzuhaltende Energie. Grundsätzlich werden alle Telegramme Tᵢ von Messort-Sendern s durch alle jeweils in Empfangsreichweite betriebenen Nahbereichs-Empfänger y und Weitbereichs-Empfänger Y aufgenommen.

Ein Nahbereichs-Empfänger y wird in größeren zeitlichen Abständen fußläufig oder per Fahrzeug K in relativ dichter Annäherung an die Messorte x zwischen diesen und somit zwischen den Senderinstallationen hindurchbewegt. Damit in der vergleichsweise kurzen Empfangszeitspanne die Aufnahme von Datentelegrammen Tᵢ, also hier von Nahbereichs-Datentelegrammen T₁, sichergestellt ist, werden diese von den Sendern s in rascher Folge aktualisiert wiederholt abgestrahlt. Eine mögliche Kollision in Form einer zeitlichen Überlappung zweier dann nicht mehr dekodierbarer Datentelegramme T₁ von unterschiedlichen Sendern s ist in der Praxis unproblematisch, da die Aussendungen der Nahbereichs-Datentelegramme T₁ von allen Sendern s ständig und in rascher Folge unsynchronisiert wiederholt werden; so dass wenigstens ein kollisionsfreier Nahbereichs-Empfang von jedem der Sender s alsbald doch gewährleistet ist. Das gilt deshalb entsprechend für den Fall, dass das gerade von einem Sender s empfangene Nahbereichs-Datentelegramm T₁ mit einem Weitbereichs-Datentelegramm T₂ von dem selben oder von einem anderen Sender s zeitlich koinzidiert. Dabei ist es vorteilhaft, wenn aufgrund kodierungsbedingt mit geringerer Reichweite abgestrahlte Nahbereichs-Datentelegramme T₁ ohnehin weniger Sender s im Kollisionsbereich betrieben werden, also in einem Bereich, in dem Sender s zu Kollisionen an Weitbereichs-Empfängern Y beitragen.

Die aus Datentelegrammen T₁ demodulierten und dekodierten Daten D1 werden für Weiterbearbeitung und Auswertung an eine Zentrale Z geliefert, in der z.B. eine Verbrauchsabrechnung erfolgt. Solch eine Übermittlung kann gewissermaßen körperlich etwa durch Übergabe von Datenspeichern erfolgen. Zweckmäßiger ist aber die Übermittlung in einem Mobilfunk-, LAN-, DSL-, WLAN- oder dergleichen Fernübertragungs-Standard.

Um den personellen Aufwand der Datenübernahme vor Ort mittels des mobilen Nahereichsempfängers y möglichst zu erübrigen, erfolgt schon jetzt vereinzelt - und insbesondere wahrscheinlich zukünftig - die Aufnahme der von den Messort-Sendern s zusätzlich abgestrahlten Weitbereichs-Datentelegramme T₂ mittels eines in Funkreichweite einer größeren Anzahl von Sendern s fest installierten, also stationären Weitbereichs-Empfängers Y. Der ist in dieser Technologie auch als Konzentrator zu bezeichnen, weil er die Information einer größeren Anzahl von Weitbereichs-Datentelegrammen T₂ als Daten-Paket D2 an die Zentrale Z übermittelt, nämlich zweckmäßigerweise in einem der erwähnten Mobilfunk-, LAN-, DSL-, WLAN- oder dergleichen eingeführten Fernübertragungs-Standards. Dafür liefert jeder der Sender s auf der erwähnten zweiten Träger-Frequenz f₂ in (gegenüber den Nahbereichs-Telegrammen T₁) wesentlich größeren zeitlichen Abständen einzelne Weitbereichs-Datentelegramme T₂ von gleicher Struktur wie der Nahbereichs-Datentelegramme T₁.

Wenn sich in einem Empfänger y oder Y ein aktuell auftretendes Weitbereichs-Datentelegramm T₂ mit einem der in rascher Folge empfangenen Nahbereichs-Datentelegramme T₁ zeitlich gerade überlappt, kann wenigstens eines davon undekodierbar werden, und deren Verbrauchs-Daten D können so verloren gehen. Das ist weniger kritisch bei einem Nahbereichs-Datentelegramm T₁, da das ja alsbald erstmals (gegebenenfalls aktualisiert) wiederholt wird und höchst wahrscheinlich schon dann vom Nahbereichs-Empfänger y ungestört aufgenommen werden kann; die aktuellen Verbrauchs-Daten D in einem von der Kollision betroffenen Weitbereichs-Datentelegramm T₂ aber drohen mangels dessen alsbaldiger Wiederholung verloren zu gehen.

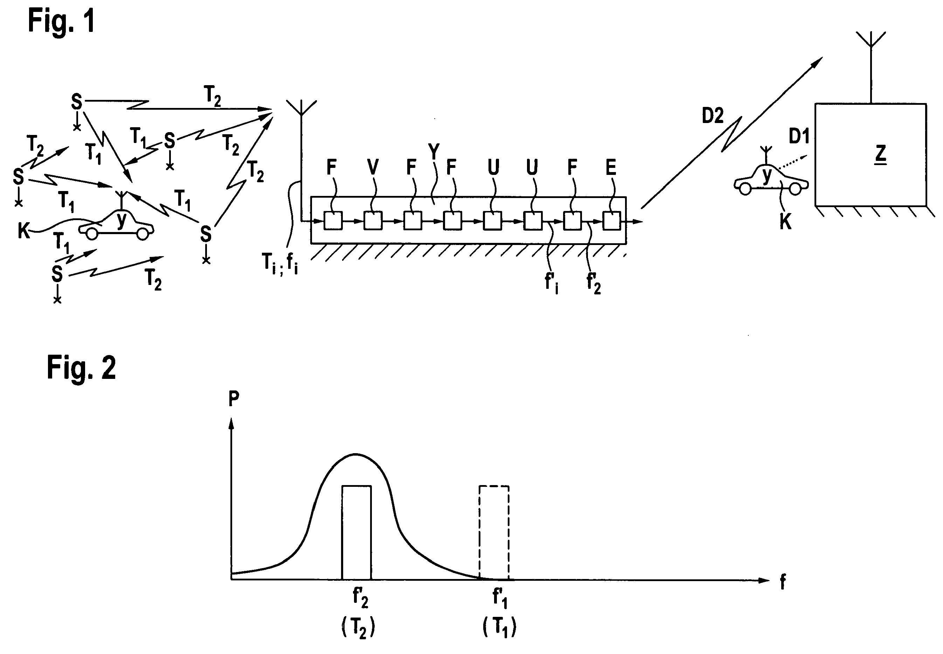

Um solchen Datenverlust zu verhindern und die Weitbereichs-Empfänger Y ganz allgemein störsicher zu machen, werden in ihnen alle empfangenen Signale (Telegramme T₁ mit den Trägerfrequenzen fᵢ und Störungen) vor und nach einer breitbandigen Vorverstärkung V mit steilen Flanken bandpassgefiltert und dann in einer wenigstens zweistufigen Überlagerungsschaltung U auf im Vergleich zu den Sendefrequenzen fᵢ die sehr niedrigen Zwischenfrequenzen f_{'i} in typischer Größenordnung von im Ergebnis ca. 3 MHz heruntergemischt. Diese werden einer Tiefpass-, vorzugsweise abermals einer engen Bandpassfilterung unterzogen. Die ein- und zweistufigen Bandpassfilter sind bevorzugt als akustische Oberflächenwellen-Filter (SAW-Filter) realisiert. So lässt sich schon mit vier SAW-Filtern in der beschriebenen Verteilung vor und nach den beiden Mischerstufen die hervorragende Störunterdrückung in der Größenordnung von 70dB bis in dichte Nachbarschaft zur heruntergemischten Weitbereichs-Trägerfrequenz f_{'2} erzielen. Die Prinzipdarstellung einer Filterkurve gemäß Fig. 2 zeigt für die vergleichsweise niederfrequent herabgemischte Weitbereichs-Frequenz f_{'2} eine optimale Durchlässigkeit P, während die dagegen höhere Nahbereichs-Frequenz f_{'1} - aber auch jeder Störeinfluss abseits der herabgemischten Weitbereichs-Trägerfrequenz f_{'2} - eine starke Bedämpfung erfährt - im Idealfall völlig ausgeblendet wird. Jedenfalls dominiert für die Demodulation im Weitbereichs-Empfänger Y die Amplitude des Weitbereichs-Datentelegramms T₂, so dass praktisch keines dessen Bits durch auch gerade empfangene aber hinreichend stark bedämpfte Nahbereichs-Telegramme T₁ oder irgendwelche Störeinflüsse abseits der Frequenz f'₂ der Weitbereichs-Telegramme T₂ verfälscht werden kann.

Deshalb kann jeder Messort x über seine Antenne von seinem Sender s quasi ständig die beiden vorzugsweise etwa gleich konfigurierten Datentelegramme T₁, T₂ aussenden, was einen Betriebsübergang vom eingeführten Drive-By-Abfragebetrieb mit Nahbereichs-Empfängern y auf künftig zu erwartenden Weitbereichsempfang mit stationären Empfängern Y ermöglicht, ohne dafür dann an den vielen Messorten x deren Sender s einzeln umkonfigurieren zu müssen.

Denn die in rascher Aufeinanderfolge von verschiedenen Messort-Sendern s empfangenen kurzen Nahbereichs-Datentelegramme T₁ blockieren nicht den Empfang von wesentlich seltener erfindungsgemäß mit gleicher Leistung bei geringfügig versetzten Trägerfrequenzen f₁, f₂ gesendeten gleich kurzen Weitbereichs-Datentelegrammen T₂ von auch im Übrigen, etwa hinsichtlich der Datenraten, im Wesentlichen gleicher Konfiguration, wenn vor und nach mehrstufigem Herabmischen der Trägerfrequenzen fᵢ; f'ᵢ steilflankige Bandpassfilterungen F erfolgen, um die Frequenzen abseits der Trägerfrequenzen fᵢ beziehungsweise abseits der herabgemischten Weitbereichs-Zwischenfrequenz f'₂ ständig zu bedämpfen.

### Bezugszeichenliste

- D: Daten (aus T, nach Z)
- E: Demodulator und Dekoder (in Y)
- fi: Träger-Frequenzen (von s für Übermittlung von Tᵢ)
- F: Filter (für f_{'j} und für f_{'i})
- K: Fahrzeug (mit y)
- P: Durchlassverhalten (von F für f'i)
- s: Kombi-Sender (von x für f₁/T₁ und für f₂/T₂)
- T: Datentelegramme (von s nach y/Y)
- U: Überlagerungs- (Superheterodyne-) schaltung für fᵢ > f_{'i}
- V: breitbandige Vorverstärkung (in y und in Y)
- x: Messorte (mit s)
- y: Nahbereichs-Empfänger (mobil)
- Y: Weitbereichs-Empfänger (stationär)
- Z: Zentrale (zum Auswerten von D aus T)
- 1: Nahbereichs-...
- 2: Weitbereichs-...

## Patentansprüche

1. Verfahren zum Übermitteln von an Messorten (x) erfassten Verbrauchs-Daten (D), die über deren jeweiligen Sender (s) in rasch aufeinanderfolgenden Nahbereichs-Telegrammen (T₁) sowie in im Vergleich dazu viel seltener gesendeten Weitbereichs-Telegrammen (T₂) an mobile Nahbereichs-Empfänger (y) ebenso wie an stationäre Weitbereichs-Empfänger (Y) übermittelt werden, in denen die empfangenen Datentelegramme (Tᵢ) nach Herabmischen auf Zwischenfrequenzen (f_{'i}) und in Weitbereichs-Empfängern (Y) unter Ausblenden der Nahbereichs-Telegramme (T₁) demoduliert werden, **dadurch gekennzeichnet, dass** hinsichtlich Sendeleistungen und Datenraten im Wesentlichen übereinstimmend strukturierte kurze Nahbereichs- und Weitbereichs-Datentelegramme (T₁, T₂) auf geringfügig unterschiedlichen Frequenzen (f₁, f₂) gesendet werden, und dass in den Weitbereichs-Empfängern (Y) aus den nach Bandpassfilterung herabgemischten Trägerfrequenzen (f_{'1}, f 2) die herabgemischte Nahbereichs-Trägerfrequenz (f'₁) ständig infolge Filterung wenigstens stark bedämpft wird.

2. Verfahren nach dem vorangehenden Anspruch, **dadurch gekennzeichnet, dass** die Träger-Frequenz (f₁) der häufiger gesendeten Nahbereichs-Telegramme (T₁) höher, als die Trägerfrequenz (f₂) der vom selben Sender (s) seltener gesendeten Weitbereichs-Telegramme (T₂) gewählt wird.

3. Verfahren nach einem der vorangehenden Ansprüche, **dadurch gekennzeichnet, dass** die Empfangssignale (fᵢ) vor und nach Vorverstärkung bandpassgefiltert, auf niedrigere Zwischenfrequenzen (f_{'i}) herabgemischt und diese abermals gefiltert werden.

4. Verfahren nach dem vorangehenden Anspruch, **dadurch gekennzeichnet, dass** die Weitbereichs-Zwischenfrequenz (f 2) eine Bandpassfilterung mit ihr als Mittenfrequenz erfährt.

5. Verfahren nach einem der beiden vorangehenden Ansprüche, **dadurch gekennzeichnet, dass** die Bandpassfilterungen als akustische Oberflächenfilterungen erfolgen.

6. Verfahren nach einem der vorangehenden Ansprüche, **dadurch gekennzeichnet, dass** die Nahbereichs-Telegramme (T₁) und die Weitbereichs-Telegramme (T₂) Datenraten aufweisen, die gleich sind oder in gleicher Größenordnung liegen.

7. Verfahren nach einem der vorangehenden Ansprüche, **dadurch gekennzeichnet, dass** die Weitbereichs-Datentelegramme (T₂) mit größerer Sendeleistung abgestrahlt werden, als die Nahbereichs-Datentelegramme (T₁).

8. Verfahren nach einem der vorangehenden Ansprüche, **dadurch gekennzeichnet, dass** Verbrauchs-Daten (D) aus in Weitbereichs-Empfängern (Y) zwischengespeicherten oder dekodierten Weitbereichs-Datentelegrammen (T₂) mittels Fernübertragungstechniken, insbesondere in einem Mobilfunk-, WLAN-, LAN- oder DSL-Standard, an eine Zentrale (Z) fernübermittelt werden.

9. Einrichtung zum Ausüben wenigstens eines der Verfahren nach den vorangehenden Ansprüchen, **dadurch gekennzeichnet, dass** an Messorten (x) ermittelte Verbrauchs-Daten (D) über an diesen Messorten (x) betriebene Sender (s) sowohl in kurzfristig wiederholten Nahbereichs-Datentelegrammen (T₁) wie auch in dagegen langfristig wiederholten Weitbereichs-Datentelegrammen (T₂) mit im Wesentlichen übereinstimmenden Telegrammstrukturen aber mit geringfügig unterschiedlichen Träger-Frequenzen (f₁, f₂) abstrahlbar sind.

10. Einrichtung nach dem vorangehenden Anspruch, **dadurch gekennzeichnet, dass** für das parallele Abstrahlen beider Telegramme (T₁, T₂) pro Messort (x) nur ein Sender (s) auf eine Antenne geschaltet ist.

11. Einrichtung nach einem der beiden vorangehenden Ansprüche, **dadurch gekennzeichnet, dass** der Sender (s) Weitbereichs-Telegramme (T₂) bei niedrigerer Folgefrequenz mit niedrigerer Träger-Frequenz (f₂ < f₁) sendet, als zeitlich parallel dazu die Nahbereichs-Telegramme (T₁).

12. Einrichtung nach einem der drei vorangehenden Ansprüche, **dadurch gekennzeichnet, dass** in den Weitbereichs-Empfängern (Y) Überlagerungsschaltungen (U) zu mehrstufigem Herabsetzen der empfangenen Trägerfrequenzen (fᵢ) auf wesentlich niedrigere Zwischenfrequenzen (f_{'i}) vorhanden sind.

13. Einrichtung nach dem vorangehenden Anspruch, **dadurch gekennzeichnet, dass** vor und nach der Überlagerungsschaltung (U) steilflankige Bandpassfilter (F) zu ständigem Bedämpfen von Frequenzen abseits der Trägerfrequenzen (fⱼ) beziehungsweise abseits der herabgemischten Weitbereichs-Trägerfrequenz (f_{'2}) installiert sind.

14. Einrichtung nach dem vorangehenden Anspruch, **dadurch gekennzeichnet, dass** die Bandpassfilter (F) ein- oder mehrstufige akustische Oberflächenwellenfilter sind.

15. Einrichtung nach einem der fünf vorangehenden Ansprüche, **dadurch gekennzeichnet, dass** der Weitbereichs-Empfänger (Y) auf Anlagen zur Fernübermittlung von aus Weitbereichs-Datentelegrammen (T₂) dekodierten Verbrauchs-Daten (D) in einem Fernübertragungs-Standard wie einem Mobilfunk-, WLAN-, LAN- oder DSL-Standard an eine Zentrale (Z) geschaltet ist.

## Claims

1. Method for transmitting consumption data (D) which are acquired at measuring locations (x) and are transmitted, via their respective transmitters (s), in close-range messages (T₁) in quick succession and in wide-range messages (T₂) which are transmitted much more rarely in comparison, to mobile close-range receivers (y) and to stationary wide-range receivers (Y) in which the received data messages (Tᵢ) are demodulated after being downmixed to intermediate frequencies (f,ᵢ) and with hiding of the close-range messages (T₁) in wide-range receivers (Y), **characterized in that** short close-range and wide-range data messages (T₁, T₂) which substantially have a matching structure with regard to transmission powers and data rates are transmitted at slightly different frequencies (f₁, f₂), and **in that**, of the carrier frequencies (f'₁, f'₂) which have been downmixed after bandpass filtering, the downmixed close-range carrier frequency (f'₁) is always at least greatly attenuated on account of filtering in the wide-range receivers (Y).

2. Method according to the preceding claim, **characterized in that** the carrier frequency (f₁) of the more frequently transmitted close-range messages (T₁) is selected to be higher than the carrier frequency (f₂) of the wide-range messages (T₂) which are transmitted more rarely by the same transmitter (s).

3. Method according to one of the preceding claims, **characterized in that**, before and after pre-amplification, the reception signals (fᵢ) are subjected to bandpass filtering, are downmixed to lower intermediate frequencies (f,ᵢ) and are filtered again.

4. Method according to the preceding claim, **characterized in that** the wide-range intermediate frequency (f'₂) undergoes bandpass filtering with itself as the centre frequency.

5. Method according to one of the two preceding claims, **characterized in that** the bandpass filtering operations are carried out as acoustic surface filtering operations.

6. Method according to one of the preceding claims, **characterized in that** the close-range messages (T₁) and the wide-range messages (T₂) have data rates which are the same or are of the same order of magnitude.

7. Method according to one of the preceding claims, **characterized in that** the wide-range data messages (T₂) are emitted with a greater transmission power than the close-range data messages (T₁).

8. Method according to one of the preceding claims, **characterized in that** consumption data (D) from wide-range data messages (T₂) buffered or decoded in wide-range receivers (Y) are remotely transmitted to a control centre (Z) using remote transmission techniques, in particular in a mobile radio, WLAN, LAN or DSL standard.

9. Device for carrying out at least one of the methods according to the preceding claims, **characterized in that** consumption data (D) determined at measuring locations (x) can be emitted, via transmitters (s) operated at these measuring locations (x), both in close-range data messages (T₁), which are repeated in the short term, and in wide-range data messages (T₂), which are, in contrast, repeated in the long term, with substantially matching message structures but with slightly different carrier frequencies (f₁, f₂).

10. Device according to the preceding claim, **characterized in that** only one transmitter (s) is connected to an antenna for emitting both messages (T₁, T₂) in a parallel manner for each measuring location (x).

11. Device according to one of the two preceding claims, **characterized in that** the transmitter (s) transmits wide-range messages (T₂) at a lower repetition rate with a lower carrier frequency (f₂ < f₁) than the close-range messages (T₁) in parallel therewith in terms of time.

12. Device according to one of the three preceding claims, **characterized in that** the wide-range receivers (Y) contain superimposition circuits (U) for reducing the received carrier frequencies (fᵢ) to substantially lower intermediate frequencies (f,ᵢ) in multiple stages.

13. Device according to the preceding claim, **characterized in that** steep-edge bandpass filters (F) for continuously attenuating frequencies remote from the carrier frequencies (fᵢ) or remote from the downmixed wide-range carrier frequency (f,₂) are installed upstream and downstream of the superimposition circuit (U).

14. Device according to the preceding claim, **characterized in that** the bandpass filters (F) are single-stage or multistage surface acoustic wave filters.

15. Device according to one of the five preceding claims, **characterized in that** the wide-range receiver (Y) is connected to systems for remotely transmitting consumption data (D) decoded from wide-range data messages (T₂) to a control centre (Z) in a remote transmission standard such as a mobile radio, WLAN, LAN or DSL standard.

## Revendications

1. Procédé pour la transmission de données de consommation (D) détectées sur des lieux de mesure (x), lesquelles sont transmises, via leur émetteur (s) respectif dans des télégrammes en zone proche (T₁) se suivant rapidement les uns les autres ainsi que dans des télégrammes en zone étendue (T₂) envoyés beaucoup plus rarement en comparaison avec, à l'attention de récepteurs en zone proche mobiles (y) ainsi qu'à l'attention de récepteurs en zone étendue stationnaires (Y) dans lesquels les télégrammes de données (Tᵢ) réceptionnés, après le mélange à la baisse à des fréquences intermédiaires (f_{'i}), et dans des récepteurs en zone étendue (Y) en masquant les télégrammes en zone proche (T₁), sont démodulés,
**caractérisé en ce que**, en ce qui concerne les puissances d'émission et les débits de données, on envoie des télégrammes de données en zone proche et en zone étendue (T₁, T₂) courts, structurés sensiblement de manière concordante, sur des fréquences (f₁, f₂) très peu différentes, et **en ce que**, dans les récepteurs en zone étendue (Y), on amorti au moins fortement la fréquence porteuse (f_{'1}) mélangée à la baisse à partir des fréquences porteuses (f_{'1}, f'₂) mélangées à la baisse après le filtrage passe-bande de manière constante suite au filtrage.

2. Procédé selon la revendication précédente, **caractérisé en ce que** la fréquence porteuse (f₁) des télégrammes en zone proche (T₁) envoyés plus souvent est sélectionnée de manière à être plus élevée que la fréquence porteuse (f₂) des télégrammes en zone étendue (T₂) envoyés plus rarement par le même émetteur (s).

3. Procédé selon l'une des revendications précédentes, **caractérisé en ce que** les signaux de réception (fᵢ) soumis à un filtrage passe-bande avant et après l'amplification préalable sont mélangés à la baisse à des fréquences intermédiaires (f_{'i}) plus basses, et celles-ci étant encore une fois filtrées.

4. Procédé selon la revendication précédente, **caractérisé en ce que** la fréquence intermédiaire en zone étendue (f'₂) est soumise à un filtrage passe-bande avec elle en tant que fréquence centrale.

5. Procédé selon l'une des deux revendications précédentes, **caractérisé en ce que** les filtrages passe-bande s'effectuent en tant que filtrages de surface acoustiques.

6. Procédé selon l'une des revendications précédentes, **caractérisé en ce que** les télégrammes en zone proche (T₁) et les télégrammes en zone étendue (T₂) présentent des débits de données qui sont identiques ou présentent le même ordre de grandeur.

7. Procédé selon l'une des revendications précédentes, **caractérisé en ce que** les télégrammes de données en zone étendue (T₂) sont émis à une puissance d'émission plus grande que les télégrammes de données en zone proche (T₁).

8. Procédé selon l'une des revendications précédentes, **caractérisé en ce que** des données de consommation (D) de télégrammes de données en zone étendue (T₂) stockés de manière intermédiaire ou décodés dans des récepteurs en zone étendue (Y) sont transmises à distance à une centrale (Z) au moyen de techniques de transmission à distance, en particulier selon un standard de téléphonie mobile, WLAN, LAN ou DSL.

9. Dispositif pour la mise en oeuvre d'au moins un procédé selon les revendications précédentes, **caractérisé en ce que** des données de consommation (D) déterminées sur des lieux de mesure (x) peuvent être émises via des émetteurs (s) exploités sur ces lieux de mesure (x), tant dans des télégrammes de données en zone proche (T₁) répétés à brève échéance qu'également dans des télégrammes de données en zone étendue (T₂) par contre répétés à longue échéance avec des structures de télégramme sensiblement concordantes, mais avec des fréquences porteuses (f₁, f₂) légèrement différentes.

10. Dispositif selon la revendication précédente, **caractérisé en ce que**, pour l'émission parallèle des deux télégrammes (T₁, T₂), seulement un émetteur (s) par lieu de mesure (x) est couplé à une antenne.

11. Dispositif selon l'une des deux revendications précédentes, **caractérisé en ce que** l'émetteur (s) envoie des télégrammes en zone étendue (T₂) à fréquence de répétition basse avec une fréquence porteuse plus basse (f₂ < f₁) que pour des télégrammes en zone proche (T₁) parallèles à ceux-ci dans le temps.

12. Dispositif selon l'une des trois revendications précédentes, **caractérisé en ce que**, dans les récepteurs en zone étendue (Y), il y a des circuits de superposition (U) pour la réduction de plusieurs niveaux des fréquences porteuses (fᵢ) réceptionnées à des fréquences intermédiaires (f_{'i}) sensiblement plus basses.

13. Dispositif selon la revendication précédente, **caractérisé en ce que**, avant et après le circuit de superposition (U), des filtres passe-bande à flanc raide (F) pour l'amortissement constant de fréquences sont mis en place à l'écart des fréquences porteuses (fᵢ) ou à l'écart de la fréquence porteuse en zone étendue (f_{'2}) mélangée à la baisse.

14. Dispositif selon la revendication précédente, **caractérisé en ce que** les filtres passe-bande (F) sont des filtres d'ondes de surface acoustiques à plusieurs étages.

15. Dispositif selon l'une des cinq revendications précédentes, **caractérisé en ce que** le récepteur en zone étendue (Y) sur des installations pour la transmission à distance de données de consommation (D) décodées à partir de télégrammes de données en zone étendue (T₂) selon un standard de transmission à distance tel un standard de téléphonie mobile, WLAN, LAN ou DSL, est couplé à une centrale (Z).
